(19) Europäisches Patentamt
European Patent Office
Office européen des brevets

(11) **EP 4 525 173 A1**

(12) **EUROPEAN PATENT APPLICATION**
published in accordance with Art. 153(4) EPC

(43) Date of publication:
**19.03.2025 Bulletin 2025/12**

(21) Application number: **23803014.2**

(22) Date of filing: **11.05.2023**

(51) International Patent Classification (IPC):
**H01M 50/342** (2021.01)    **H01M 50/30** (2021.01)

(52) Cooperative Patent Classification (CPC):
Y02E 60/10

(86) International application number:
**PCT/CN2023/093648**

(87) International publication number:
**WO 2023/217245 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022  CN 202210512549**

(71) Applicant: **BYD Company Limited
Shenzhen, Guangdong 518118 (CN)**

(72) Inventors:
• **SUN, Huajun
Shenzhen, Guangdong 518118 (CN)**

• **YUAN, Wansong
Shenzhen, Guangdong 518118 (CN)**
• **WANG, Xinyue
Shenzhen, Guangdong 518118 (CN)**
• **ZHU, Yan
Shenzhen, Guangdong 518118 (CN)**
• **DENG, Dongjun
Shenzhen, Guangdong 518118 (CN)**

(74) Representative: **Mathys & Squire
The Shard
32 London Bridge Street
London SE1 9SG (GB)**

(54) **BATTERY, BATTERY MODULE, BATTERY PACK AND VEHICLE**

(57)    A vehicle, which has a battery pack. The battery pack comprises a battery or a battery module. The battery pack comprises a battery shell and an anti-explosion valve. The anti-explosion valve is arranged on the battery shell, is provided with a notch groove, and has an opening area. In the depth direction of the notch groove, the outer edge of the orthographic projection of the opening area is a predetermined opening boundary; the area of the orthographic projection of the opening area is $S_1$, the unit of $S_1$ being $mm^2$; and the battery capacity is A, the unit of A being Ah. When the positive electrode material of the battery is a compound having an olivine-type structure, $S_1$ and A satisfy: $S_1 > 0.5$ A. When the positive electrode material of the battery contains a layered compound, $S_1$ and A satisfy: $Si > 1.2$ A.

FIG. 1

**EP 4 525 173 A1**

**Description**

**CROSS-REFERENCE TO RELATED APPLICATIONS**

The present disclosure claims priority to and benefits of Chinese Patent Application No. 202210512549.3 filed by the BYD Co., Ltd. on May 12, 2022 and entitled "BATTERY, BATTERY MODULE, BATTERY PACK, AND VEHICLE". The entire content of the above-referenced application is incorporated herein by reference.

**FIELD**

The present disclosure relates to the field of battery technologies, and in particular, to a battery, a battery module, a battery pack, and a vehicle.

**BACKGROUND**

In the related art, an anti-explosion valve of a battery (for example, a lithium-ion battery) is designed to be opened in time for pressure release when the battery is abused or air pressure inside the battery is increased, thereby preventing safety problems such as firing or explosion of the battery. However, during actual application, safety accidents such as firing or explosion of a battery are caused when the internal pressure of the battery is not released in time or a pressure release speed is not fast enough.

**SUMMARY**

The present disclosure is intended to resolve at least one of technical problems existing in the related art. Therefore, an objective of the present disclosure is to provide a battery, to improve the use safety of the battery.

Another objective of the present disclosure is to provide a battery module including the battery.

Still another objective of the present disclosure is to provide a battery pack including the battery or the battery module.

Yet another objective of the present disclosure is to provide a vehicle including the battery pack.

An embodiment of a first aspect of the present disclosure provides a battery. The battery includes a battery shell an anti-explosion valve. The anti-explosion valve is arranged on the battery shell, a notch groove is provided on the anti-explosion valve, and the anti-explosion valve includes an opening region. In a depth direction of the notch groove, an outer edge of an orthographic projection of the opening region is a predetermined opening boundary, an area of the orthographic projection of the opening region is $S_1$, a unit of $S_1$ is $mm^2$, a capacity of the battery is A, a unit of A is Ah, and $S_1$ and A meet: $S_1 > 0.5A$.

According to the battery provided in the embodiment of the present disclosure, by controlling a ratio of the area $S_1$ of the opening region to the capacity A of the battery, a pressure release rate of the battery is improved, so that the internal pressure of the battery can be released in time and quickly, thereby improving protection to the battery and the safety of the battery.

According to some examples of the present disclosure, when a positive electrode material of the battery is a compound of an olivine-shaped structure, $S_1$ and A meet: $S_1 > 0.5A$; or when a positive electrode material of the battery includes a layered compound, $S_1$ and A meet: $S_1 > 1.2A$.

According to some examples of the present disclosure, $S_1$ meets: $80\ mm^2 \leq S_1 \leq 1600\ mm^2$.

According to some examples of the present disclosure, A meets: $30\ Ah \leq A \leq 400\ Ah$.

According to some examples of the present disclosure, the notch groove includes two first arc segments arranged opposite to each other, a first straight-line segment, and two second straight-line segments spaced apart from each other, the first straight-line segment and the second straight-line segments are arranged parallel to each other, two ends of the first straight-line segment are respectively connected to the two first arc segments, and each of the second straight-line segments is connected to the corresponding first arc segment; and in the depth direction of the notch groove, two free ends of an outer edge of an orthographic projection of the notch groove are connected to form a connection line, and the connection line and the outer edge of the orthographic projection of the notch groove jointly form the predetermined opening boundary.

According to some examples of the present disclosure, a first reinforcing groove is formed on the opening region, the first reinforcing groove includes two fourth arc segments, the two fourth arc segments are symmetrically arranged along a width direction of the anti-explosion valve, vertices of the two fourth arc segments coincide with each other, two ends of one of the fourth arc segments extend to the second straight-line segments, and two ends of the other of the fourth arc segments extend to the first straight-line segment.

According to some examples of the present disclosure, in the depth direction of the notch groove, a depth of the first reinforcing groove is less than a depth of the notch groove.

According to some examples of the present disclosure, the notch groove includes two second arc segments arranged opposite to each other and two third straight-line segments arranged parallel to each other, two ends of each of the third straight-line segments are respectively connected to the two second arc segments, and the two third straight-line segments and the two second arc segments form a closed annular structure; and in the depth direction of the notch groove, an outer edge of an orthographic projection of the notch groove forms the predetermined opening boundary.

According to some examples of the present disclosure, a second reinforcing groove is formed on the opening region, the second reinforcing groove includes two eighth straight-line segments and one ninth straight-line segment, one end of each of the two eighth straight-line segments is connected to the ninth straight-line segment, an angle is formed between the two eighth straight-line segments, the other ends of the two eighth straight-line segments respectively extend to the two third straight-line segments, and the other end of the ninth straight-line segment is connected to the second arc segment.

According to some examples of the present disclosure, the notch groove includes a fourth straight-line segment and four fifth straight-line segments, and two ends of the fourth straight-line segment are respectively connected to two fifth straight-line segments arranged at a preset angle; and in the depth direction of the notch groove, an arc-shaped segment is defined between free ends of orthographic projections of two fifth straight-line segments located at a same end of the fourth straight-line segment, the arc-shaped segment uses a vertex of the preset angle as a center of a circle, a sixth straight-line segment is defined between free ends of orthographic projections of two fifth straight-line segments located on a same side of the fourth straight-line segment, and two arc-shaped segments and two sixth straight-line segments jointly form the predetermined opening boundary.

According to some examples of the present disclosure, the anti-explosion valve includes a connection segment, a support segment, and a buffer segment, the connection segment is connected to an outer peripheral side of the support segment, the support segment and the connection segment are spaced apart from each other along a thickness direction of the support segment, the buffer segment is connected between the connection segment and the support segment, and the opening region is provided on the support segment.

According to some examples of the present disclosure, a groove is formed on the anti-explosion valve, and the notch groove is formed on a bottom wall of the groove.

According to some examples of the present disclosure, in the depth direction of the notch groove, an outer edge of an orthographic projection of the groove and the outer edge of the orthographic projection of the notch groove have an overlapping region.

According to some examples of the present disclosure, a shape of the anti-explosion valve is an ellipse or an athletic track.

According to some examples of the present disclosure, the anti-explosion valve is of a flat sheet structure.

According to some examples of the present disclosure, a volume of the battery is V, and a unit of V is $mm^3$, where V meets: $40000 \ mm^3 \leq V \leq 3500000 \ mm^3$.

According to some examples of the present disclosure, the volume of the battery is V, and the unit of V is $mm^3$, where $S_1$ and V meet: $0.3 \ mm^{-1} \leq 5000 \times S_1/V$.

According to some examples of the present disclosure, the volume of the battery is V, and the unit of V is $mm^3$, where $S_1$ and V meet: $5000 \times S_1/V \leq 6 \ mm^{-1}$.

According to some examples of the present disclosure, the volume of the battery is V, and the unit of V is $mm^3$, where when the positive electrode material of the battery is the compound of the olivine-shaped structure, $S_1$ and V meet: $0.3 \ mm^{-1} \leq 5000 \times S_1/V \leq 5 \ mm^{-1}$.

According to some examples of the present disclosure, the volume of the battery is V, and the unit of V is $mm^3$, where when the positive electrode material of the battery includes the layered compound, $S_1$ and V meet: $0.5 \ mm^{-1} \leq 5000 \times S_1/V \leq 6 \ mm^{-1}$.

According to some examples of the present disclosure, in the depth direction of the notch groove, an area of an orthographic projection of the anti-explosion valve is S, and a unit of S is $mm^2$, where S meets: $178.5 \ mm^2 \leq S \leq 5212.5 \ mm^2$.

According to some examples of the present disclosure, in the depth direction of the notch groove, the area of the orthographic projection of the anti-explosion valve is S, and the unit of S is $mm^2$, where S and $S_1$ further meet: $0.3 \leq S_1/S \leq 0.95$.

An embodiment of a second aspect of the present disclosure provides a battery module, including the battery according to the embodiment of the first aspect.

An embodiment of a third aspect of the present disclosure provides a battery pack, including the battery according to the embodiment of the first aspect or the battery module according to the embodiment of the second aspect.

An embodiment of a fourth aspect of the present disclosure provides a vehicle, including the battery according to the embodiment of the first aspect or the battery pack according to the embodiment of third aspect.

Additional aspects and advantages of the present disclosure will be given in the following description, some of which will become apparent from the following description or may be learned from practice of the present disclosure.

## BRIEF DESCRIPTION OF THE DRAWINGS

The foregoing and/or additional aspects and advantages of the present disclosure will become apparent and comprehensible in the description of embodiments made with reference to the following accompanying drawings. In the accompanying drawings:

FIG. 1 is a schematic diagram of a battery according to an embodiment of the present disclosure;
FIG. 2 is a schematic cross-sectional view of an anti-explosion valve according to an embodiment of the present disclosure;
FIG. 3 is a schematic diagram of an anti-explosion valve according to an embodiment of the present disclosure;
FIG. 4 is a schematic diagram of an anti-explosion valve according to another embodiment of the present disclosure;
FIG. 5 is a schematic diagram of an anti-explosion valve according to still another embodiment of the present disclosure;
FIG. 6 is a schematic diagram of an anti-explosion valve according to yet another embodiment of the present disclosure;
FIG. 7 is a schematic comparison diagram of pressure release rates of batteries of Comparative Example 1 and Examples 1 to 3 according to the present disclosure;
FIG. 8 is a schematic comparison diagram of pressure release rates of batteries of Comparative Example 2 and Examples 4 to 6 according to the present disclosure;
FIG. 9 is a schematic comparison diagram of pressure release rates of batteries of Comparative Example 3 and Examples 7 to 9 according to the present disclosure;
FIG. 10 is a schematic comparison diagram of pressure release rates of batteries of Comparative Example 4 and Examples 10 to 12 according to the present disclosure;
FIG. 11 is a schematic comparison diagram of pressure release rates of batteries of Comparative Example 5 and Examples 13 to 15 according to the present disclosure;
FIG. 12 is a schematic comparison diagram of pressure release rates of batteries of Comparative Example 5 and Examples 16 to 18 according to the present disclosure;
FIG. 13 is a schematic comparison diagram of pressure release rates of batteries of Comparative Example 6 and Examples 19 to 21 according to the present disclosure;
FIG. 14 is a schematic comparison diagram of pressure release rates of batteries of Comparative Example 6 and Examples 22 to 24 according to the present disclosure;
FIG. 15 is a schematic comparison diagram of pressure release rates of batteries of Comparative Example 7 and Example 25 according to the present disclosure;
FIG. 16 is a schematic comparison diagram of pressure release rates of batteries of Comparative Example 8 and Example 26 according to the present disclosure;
FIG. 17 is a schematic comparison diagram of pressure release rates of batteries of Comparative Example 9 and Example 27 according to the present disclosure;
FIG. 18 is a schematic comparison diagram of pressure release rates of batteries of Comparative Example 10 and Example 28 according to the present disclosure;
FIG. 19 is a schematic comparison diagram of pressure release rates of batteries of Comparative Example 11 and Example 29 according to the present disclosure;
FIG. 20 is a schematic comparison diagram of pressure release rates of batteries of Comparative Example 12 and Example 30 according to the present disclosure;
FIG. 21 is a schematic diagram of an anti-explosion valve of a flat sheet structure according to an embodiment of the present disclosure;
FIG. 22 is a schematic cross-sectional view of an anti-explosion valve of a flat sheet structure according to an embodiment of the present disclosure;
FIG. 23 is a schematic diagram of a vehicle according to an embodiment of the present disclosure;
FIG. 24 is a schematic diagram of a vehicle according to another embodiment of the present disclosure; and
FIG. 25 is a schematic diagram of a vehicle according to still another embodiment of the present disclosure.

List of reference numerals:

100. Battery;
10. Battery shell; 20. Anti-explosion valve; 21. Connection segment; 22. Support segment; 23. Buffer segment; 221. Groove; 24. Opening region; 25. Notch groove; 251. First arc segment; 252. First straight-line segment; 253. Second straight-line segment; 254. Second arc segment; 255. Third straight-line segment; 256. Fourth straight-line segment; 257. Fifth straight-line segment; 258. Sixth straight-line segment; 259. Arc-shaped segment; 260. Fourth arc segment; 261. Eighth straight-line segment; 262. Ninth straight-line segment; 263. Connection line; 27. Seventh straight-line segment; 28. Third arc segment; 29. First reinforcing groove; 290. Second reinforcing groove; 200. Battery module; 300. Battery pack; and 400. Vehicle.

## DETAILED DESCRIPTION

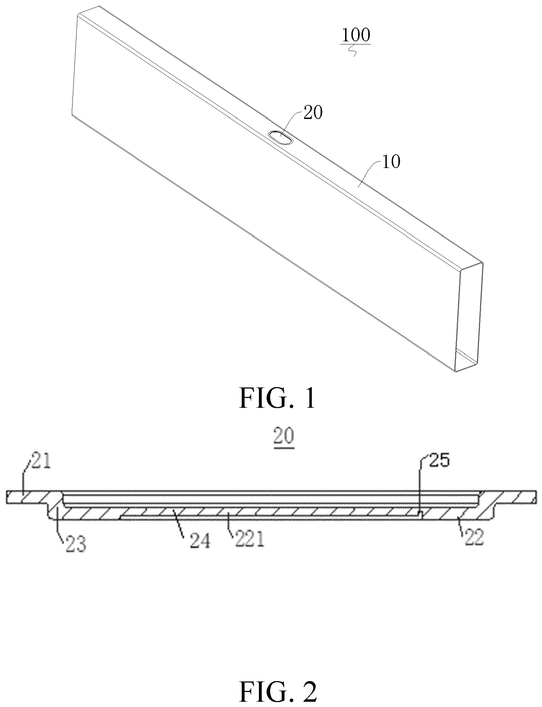

Embodiments of the present disclosure are described in detail below, and the embodiments described with reference to the accompanying drawings are exemplary. The following describes a battery 100 according to an embodiment of a first aspect of the present disclosure with reference to FIG. 2 to FIG. 22.

As shown in FIG. 1 to FIG. 22, the battery 100 according to the embodiment of the first aspect of the present disclosure includes a battery shell 10 and an anti-explosion valve 20.

Specifically, the anti-explosion valve 20 is arranged on the battery shell 10. A notch groove 25 is provided on the anti-explosion valve 20. The anti-explosion valve 20 includes an opening region 24. In a depth direction of the notch groove 25 (that is, a direction from a groove top to a groove bottom of the notch groove 25), an outer edge of an orthographic projection of the opening region 24 is a predetermined opening boundary, an area of the orthographic projection of the opening region 24 is $S_1$, a unit of $S_1$ is mm$^2$, a capacity of the battery 100 is A, and a unit of A is Ah. $S_1$ and A meet: $S_1 > 0.5A$. In the foregoing formula, the unit of the area $S_1$ of the opening region 24 is square millimeter, and the unit of the capacity A of the battery 100 is ampere-hour. When the internal pressure of the battery 100 is excessively large, gas in the battery 100 may be smoothly released from the opening region 24 of the anti-explosion valve 20, to ensure the use safety of the battery 100.

According to the battery 100 provided in the embodiment of the present disclosure, by controlling a ratio of the area $S_1$ of the opening region 24 to the capacity A of the battery 100, a pressure release rate of the battery 100 is improved, so that the internal pressure of the battery 100 can be released in time and quickly, thereby improving protection to the battery 100 and the safety of the battery 100.

When a positive electrode material of the battery 100 is a compound of an olivine-shaped structure, $S_1$ and A meet: $S_1 > 0.5A$. In this way, by selecting the compound of the olivine-shaped structure as the positive electrode material of the battery 100, a high capacity of the battery 100 can be obtained, so that the battery 100 can have excellent electrochemical performance. The compound of the olivine-shaped structure may be selected from lithium iron phosphate, lithium ferromanganese phosphate, or a mixture of lithium iron phosphate and lithium ferromanganese phosphate, but is not limited thereto.

When the positive electrode material of the battery 100 includes a layered compound, $S_1$ and A meet: $S_1 > 1.2A$. Because the activity of the layered compound is high, by selecting the layered compound as the positive electrode material of the battery 100, the active material accounts for a large proportion inside the battery 100, so that the battery 100 has larger energy, and the battery 100 has a higher capacity. Therefore, the battery 100 has a higher requirement on a pressure release rate of the anti-explosion valve 20. By setting $S_1$ and A to meet $S_1 > 1.2A$, an area of the opening region 24 of the anti-explosion valve 20 is larger, which is more conducive to exhausting gas in the battery 100 as soon as possible, thereby improving the safety of the battery 100 more effectively. The positive electrode material of the battery 100 may be selected from a lithium nickel cobalt manganese oxygen ternary layered material, lithium iron phosphate and a lithium nickel cobalt manganese oxygen ternary layered material, or lithium iron manganese and a lithium nickel cobalt manganese oxygen ternary layered material, but is not limited thereto.

A description is provided below by using Comparative Examples 1 to 4 (that is, the related art) and Examples 1 to 12 (that is, embodiments of the present disclosure). Batteries 100 in Comparative Examples 1 to 4 and batteries 100 in Examples 1 to 12 are tested separately by using a method specified in GB/T 31485-2015, and corresponding pressure release rate curves of the batteries 100 are recorded. The battery in the related art is basically the same as the battery 100 in the embodiments, and differences between the batteries only lie in values of the area $S_1$ of the orthographic projection of the opening region 24 and the battery capacity A.

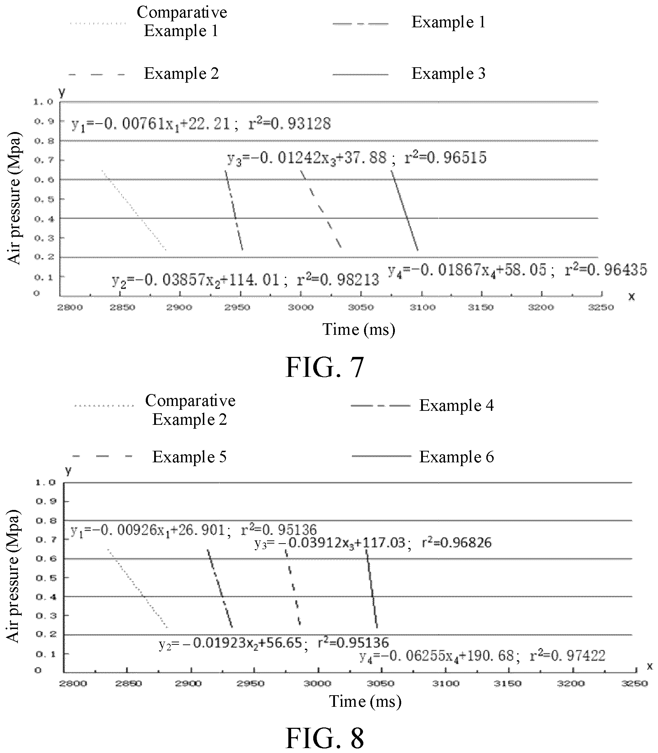

When the positive electrode material of the battery 100 is lithium iron phosphate, areas $S_1$ of the orthographic projections of the opening regions 24 and battery capacities A of the batteries in Comparative Examples 1 and 2, and areas $S_1$ of the orthographic projections of the opening regions 24 and battery capacities A of the batteries 100 in Examples 1 to 12 are selected from Table 1 below. Pressure release rate test results of Comparative Example 1, Comparative Example 2, and Examples 1 to 6 are shown in FIG. 7 and FIG. 8.

Table 1

| Serial number | $S_1$(lithium iron) | A | $S_1$/A |
|---|---|---|---|
| Example 1 | 80 | 30 | 2.666666667 |

(continued)

| Serial number | $S_1$(lithium iron) | A | $S_1/A$ |
|---|---|---|---|
| Example 2 | 150 | 200 | 0.75 |
| Example 3 | 300 | 200 | 1.5 |
| Example 4 | 500 | 260 | 1.923076923 |
| Example 5 | 800 | 300 | 2.666666667 |
| Example 6 | 1600 | 400 | 4 |
| Comparative Example 1 | 150 | 400 | 0.375 |
| Comparative Example 2 | 70 | 160 | 0.4375 |

With reference to Table 1, FIG. 7, and FIG. 8, it can be learned that FIG. 7 is a curve diagram of air pressure changes inside the battery 100 in Examples 1 to 3 and Comparative Example 1 when the internal pressure of the battery 100 increases and the pressure is released. FIG. 8 is a curve graph of air pressure changes inside the battery 100 in Examples 4 to 6 and Comparative Example 2 when the internal pressure of the battery 100 increases and the pressure is released. It can be seen from the curve diagrams that, per unit time, the change values of air pressure decrease of the batteries 100 in Examples 1 to 6 are greater than the change values of air pressure decrease of the batteries 100 in Comparative Example 1 and Comparative Example 2.

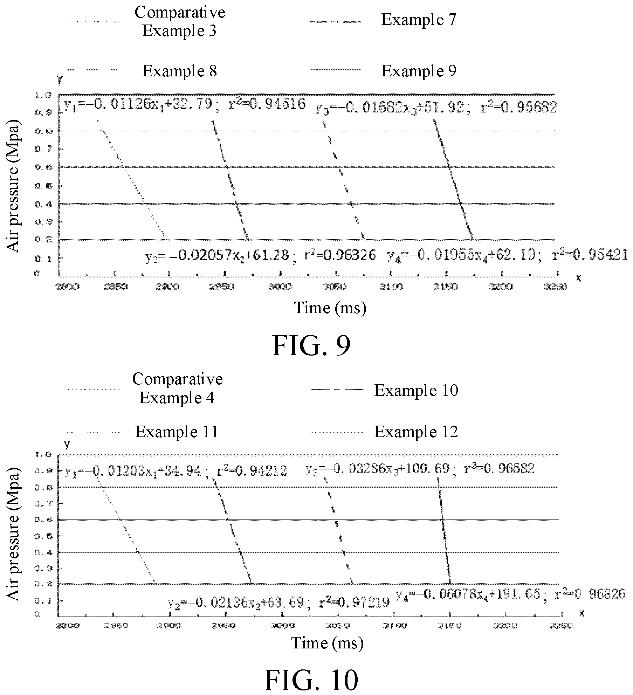

When the positive electrode material of the battery 100 is a lithium nickel cobalt manganese oxygen ternary layered material, areas $S_1$ of the orthographic projections of the opening regions 24 and battery capacities A of the batteries in Comparative Examples 3 and 4, and areas $S_1$ of the orthographic projections of the opening regions 24 and battery capacities A of the batteries 100 in Examples 7 to 12 are selected from Table 2 below. Pressure release rate test results of Comparative Example 3, Comparative Example 4, and Examples 7 to 12 are shown in FIG. 9 and FIG. 10.

Table 2

| Serial number | $S_1$(Ternary) | A | $S_1/A$ |
|---|---|---|---|
| Example 7 | 80 | 30 | 2.666666667 |
| Example 8 | 150 | 100 | 1.5 |
| Example 9 | 300 | 200 | 1.5 |
| Example 10 | 500 | 260 | 1.923076923 |
| Example 11 | 800 | 300 | 2.666666667 |
| Example 12 | 1600 | 400 | 4 |
| Comparative Example 3 | 300 | 400 | 0.75 |
| Comparative Example 4 | 70 | 70 | 1 |

With reference to Table 2, FIG. 9, and FIG. 10, it can be learned that FIG. 9 is a curve diagram of air pressure changes inside the battery 100 in Examples 7 to 9 and Comparative Example 3 when the internal pressure of the battery 100 increases and the pressure is released. FIG. 10 is a curve graph of air pressure changes inside the battery 100 in Examples 10 to 12 and Comparative Example 4 when the internal pressure of the battery 100 increases and the pressure is released. It can be seen from the curve diagrams that, per unit time, the change values of air pressure decrease of the batteries 100 in Examples 7 to 12 are greater than the change values of air pressure decrease of the batteries 100 in Comparative Example 3 and Comparative Example 4.

Therefore, with reference to Examples 1 to 12, a value range of $S_1/a$ protected in the embodiments of the present disclosure can effectively increase the area $S_1$ of the orthographic projection of the opening region 24, and increase an amount of gas exhausted from the anti-explosion valve 20 per unit time, thereby increasing the safety of the battery 100 using the anti-explosion valve 20 of the present disclosure.

In some embodiments, $S_1$ meets: $80\,mm^2 \leq S_1 \leq 1600\,mm^2$. If the area of the orthographic projection of the opening region 24 is less than $80\,mm^2$, the area of the opening region 24 is small, and the requirement of exhausting the gas in the battery 100 as soon as possible may not be met. If the area of the orthographic projection of the opening region 24 is greater than $1600\,mm^2$, the area of the opening region 24 is large, and a structural strength of the anti-explosion valve 20 may be reduced.

In some embodiments, A meets: 30 Ah≤A≤400 Ah. If the capacity of the battery 100 is lower than 30 Ah, the capacity of the battery 100 is low, and the electrochemical performance may be poor. If the capacity of the battery 100 is higher than 400 Ah, the capacity of the battery 100 is high, leading to an excessively high requirement on an electrode material of the battery 100, and the safety performance of the battery 100 may be reduced.

Therefore, by setting $S_1$ and A to respectively meet: $80\,mm^2 \le S_1 \le 1600\,mm^2$ and 30 Ah≤A≤400 Ah, an area of the opening region 24 is suitable, so that a pressure release rate of the anti-explosion valve 20 is improved while the structural strength of the anti-explosion valve 20 is ensured. In addition, the battery 100 has a suitable capacity, which can meet excellent charging and discharging performance of the battery 100, and can also ensure that the gas can be exhausted in time after the internal pressure of the battery 100 increases, thereby ensuring that the battery 100 can be safely used.

According to some embodiments of the present disclosure, the notch groove 25 may be configured as a C-shaped notch groove or a double Y-shaped notch groove. A pattern of the notch groove 25 is not limited to the foregoing shapes, and the notch groove may be a notch groove 25 in any shape. The notch groove 25 may be designed according to requirements to meet different usage occasions.

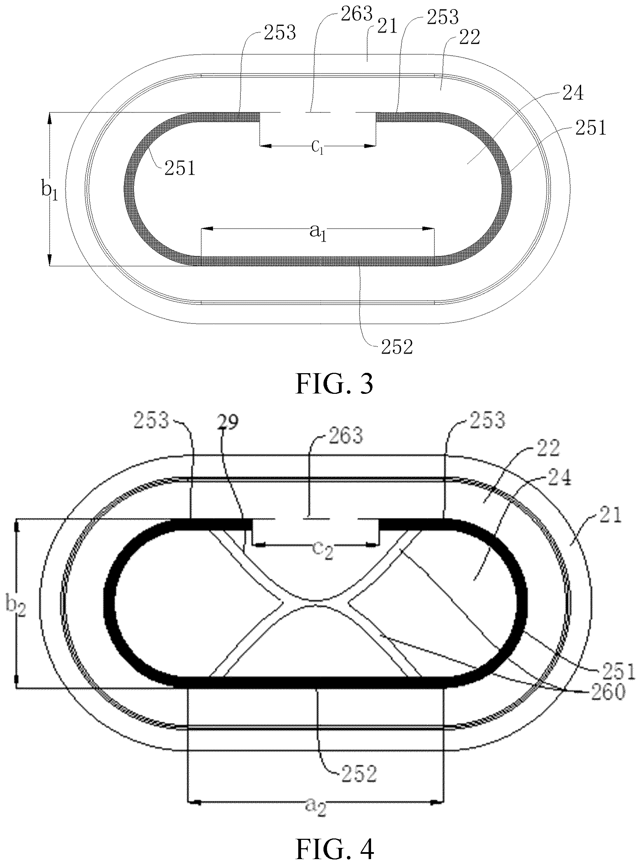

According to some specific embodiments of the present disclosure, with reference to FIG. 3 and FIG. 4, the notch groove 25 is a C-shaped notch groove. The notch groove 25 includes two first arc segments 251 arranged opposite to each other, a first straight-line segment 252, and two second straight-line segments 253 spaced apart from each other. The first straight-line segment 252 and the second straight-line segments 253 are arranged parallel to each other. Two ends of the first straight-line segment 252 are respectively connected to the two first arc segments 251. Each of the second straight-line segments 253 is connected to the corresponding first arc segment 251. In other words, the two ends of the first straight-line segment 252 are respectively connected to one ends of the two first arc segments 251, the other ends of the two first arc segments 251 are respectively connected to one second straight-line segment 253, and the two second straight-line segments 253 are spaced apart from each other.

With reference to FIG. 3 and FIG. 4, in the depth direction of the notch groove 25, two free ends of an outer edge of an orthographic projection of the notch groove 25 are connected to form a connection line 263. That is, a connection line between side edges of the two second straight-line segments 253 away from a center of the anti-explosion valve is the connection line 263. The connection line 263 and the outer edge of the orthographic projection of the notch groove 25 jointly form the predetermined opening boundary. In this case, an area of a region defined within the predetermined opening boundary (that is, an area of the orthographic projection of the opening region 24 in the depth direction of the notch groove 25) is $S_c$, $S_c = a_1 \times b_1 + \pi \times b_1^2/4$, a total length of the notch groove 25 is $L_c$, and $L_c = 2a_1 - c_1 + \pi b_1$, where $a_1$ represents a length of the first straight-line segment 252, $b_1$ represents a distance between an outer side of the first straight-line segment 252 and an outer side of the second straight-line segment 253, and $c_1$ represents a distance between the two second straight-line segments 253, that is, a length of the connection line 263.

Further, a cross section of the notch groove 25 may be a rectangle or an inverted trapezoid. The "cross section" herein is a plane parallel to the depth direction of the notch groove 25. When the cross section of the notch groove 25 is an inverted trapezoid, a width of the notch groove 25 gradually decreases in a direction toward the groove bottom of the notch groove 25. In this case, $a_1$ may be understood as a length of an outer edge of the first straight-line segment 252 at the groove top or the opening, and $b_1$ may be understood as a diameter of an outer edge of the first arc segment 251 at the groove top or the opening. In other words, in the depth direction of the notch groove 25 (that is, in the direction from a groove opening to the groove bottom of the notch groove 25), the outer edge of the orthographic projection of the notch groove 25 includes two opposite semicircles, $b_1$ may be understood as a diameter of each of the semicircles, and $a_1$ may be understood as a distance between centers of two semicircles.

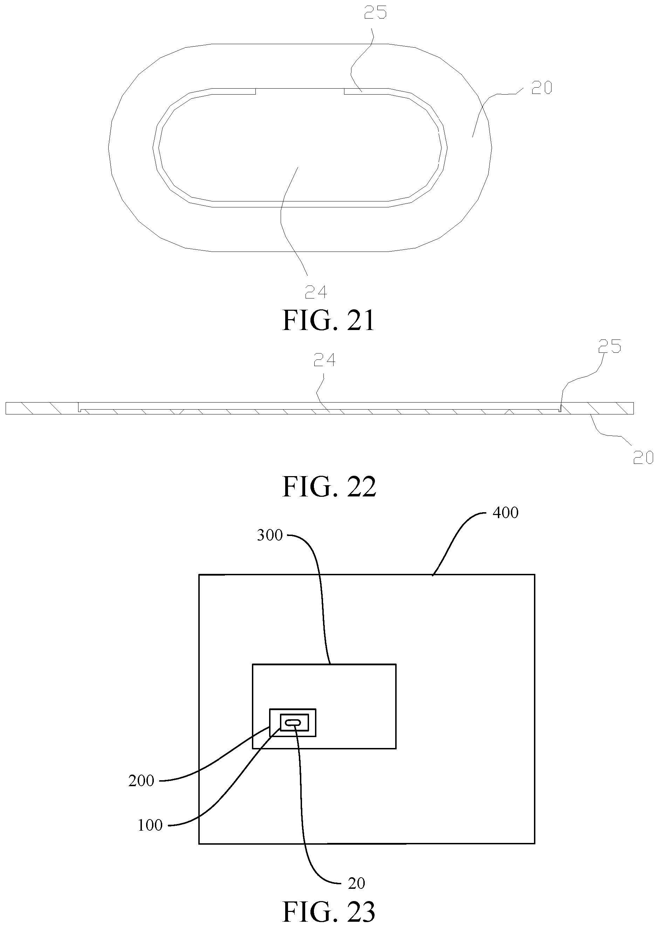

In some embodiments, as shown in FIG. 4 and FIG. 23, the notch groove 25 is a C-shaped notch groove. A first reinforcing groove 29 for structural reinforcement is further provided on the opening region 24, and the first reinforcing groove 29 is X-shaped. The first reinforcing groove 29 includes two fourth arc segments 260. The two fourth arc segments 260 are symmetrically arranged in a width direction (for example, an up-down direction in FIG. 4) of the anti-explosion valve 20, and vertices of the two fourth arc segments 260 coincide with each other. Two ends of one of the fourth arc segments 260 extend and respectively abut against the second straight-line segments 253, and two ends of the other of the fourth arc segments 260 extend and respectively abut against the first straight-line segment 252. In the depth direction of the notch groove 25, a depth of the first reinforcing groove 29 is less than a depth of the notch groove 25. In this case, an area of a region defined within the predetermined opening boundary (that is, an area of the orthographic projection of the opening region 24 in the depth direction of the notch groove 25) is $S_x$, $S_x = S_c = a_2 \times b_2 + \pi \times b_2^2/4$, a total length of the notch groove 25 is $L_x$, and $L_x = L_c = 2a_2 - c_2 + \pi b_2$, where $a_2$ represents a length of the first straight-line segment 252, $b_2$ represents a distance between an outer side of the first straight-line segment 252 and an outer side of the second straight-line segment 253, and $c_2$ represents a distance between two second straight-line segments 253.

Further, a cross section of the notch groove 25 may be a rectangle or an inverted trapezoid. The "cross section" herein is a plane parallel to the depth direction of the notch groove 25. When the cross section of the notch groove 25 is an inverted trapezoid, a width of the notch groove 25 gradually decreases in a direction toward the groove bottom of the notch groove 25. In this case, $a_2$ may be understood as a length of an outer edge of the first straight-line segment 252 at the groove top or the opening, and $b_2$ may be understood as a diameter of an outer edge of the first arc segment 251 at the groove top or the opening. In other words, in the depth direction of the notch groove 25 (that is, in the direction from a groove opening to the groove bottom of the notch groove 25), the outer edge of the orthographic projection of the notch groove 25 includes two opposite semicircles, $b_2$ may be understood as a diameter of each of the semicircles, and $a_2$ may be understood as a distance between centers of two semicircles.

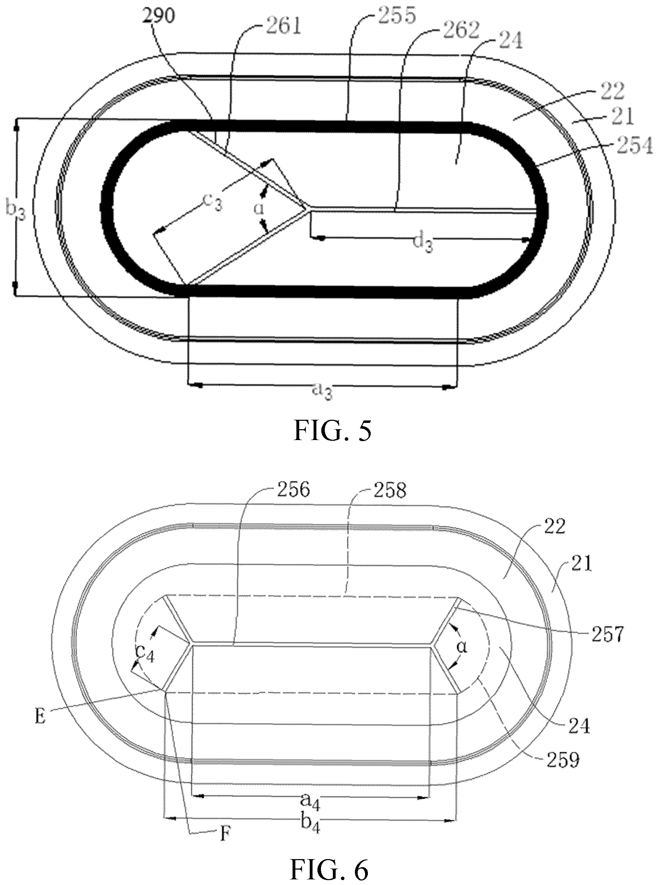

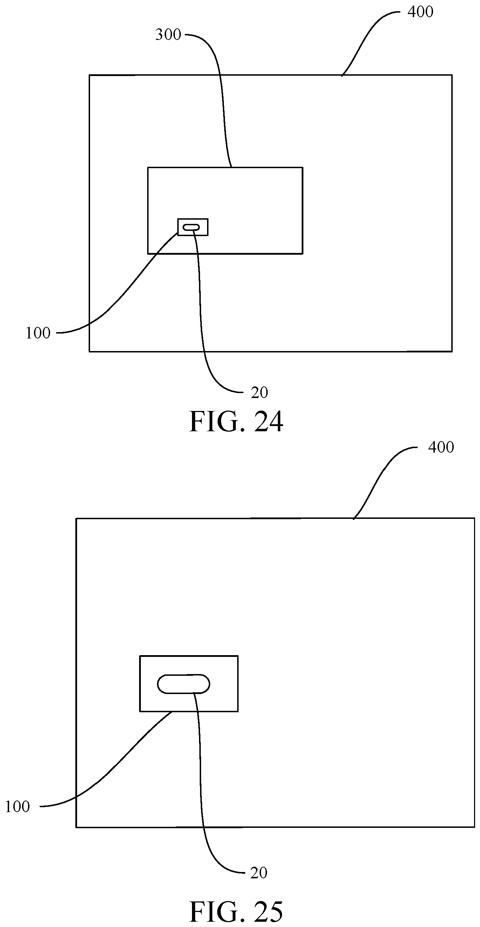

According to some specific embodiments of the present disclosure, as shown in FIG. 5 and FIG. 24, the notch groove 25 is an annular notch groove. A second reinforcing groove 290 for structural reinforcement is further provided on the opening region 24, and the second reinforcing groove 290 is Y-shaped. The Y-shaped second reinforcing groove is located on an inner side of the annular notch groove and is connected to the annular notch groove. For example, the annular notch groove includes two second arc segments 254 arranged opposite to each other and two third straight-line segments 255 arranged parallel to each other. Two ends of each of the third straight-line segments 255 are respectively connected to the two second arc segments 254. The two third straight-line segments 255 and the two second arc segments 254 form a closed annular structure. In the depth direction of the notch groove 25, an outer edge of an orthographic projection of the notch groove 25 forms the predetermined opening boundary. The predetermined opening boundary may be encircled by the two third straight-line segments 255 and side edges of the two second arc segments 254 away from the center of the anti-explosion valve.

The second reinforcing groove 290 includes two eighth straight-line segments 261 and one ninth straight-line segment 262. One end of each of the two eighth straight-line segments 261 is connected to the ninth straight-line segment 262, an angle $\alpha$ is formed between the two eighth straight-line segments 261, and the other ends of the two eighth straight-line segments 261 may be each connected to one third straight-line segment 255. The other end of the ninth straight-line segment 262 may be connected to the second arc segment 254. A thickness corresponding to the second reinforcing groove 290 on the opening region 24 may be less than a thickness corresponding to the annular notch groove on the opening region. That is, a depth of the second reinforcing groove 290 is less than a depth of the annular notch groove. In this way, when the internal pressure of the battery 100 increases, the opening region 24 protrudes outward under the effect of the internal pressure, and the second reinforcing groove 290 can resist deformation of the opening region 24 through deformation, thereby increasing a structural strength and an anti-deformation capability of the opening region 24, and effectively avoiding mistaken opening of the anti-explosion valve. In this case, an area of a region defined within the predetermined opening boundary (that is, an area of the orthographic projection of the opening region 24 in the depth direction of the notch groove 25) is $S_y$, $Sy=a_3 \times b_3 + \pi \times b_3^2/4$, a total length of the notch groove 25 is $L_y$, and $L_y = 2c_3 + d_3$, where $a_3$ is a length of the third straight-line segment 255, $b_3$ is a distance between outer sides of the two third straight-line segments 255, $c_3$ is a length of the eighth straight-line segment 261, and $d_3$ is a length of the ninth straight-line segment 262.

Further, a cross section of the notch groove 25 may be a rectangle or an inverted trapezoid. The "cross section" herein is a plane parallel to the depth direction of the notch groove 25. When the cross section of the notch groove 25 is an inverted trapezoid, a width of the notch groove 25 gradually decreases in a direction toward the groove bottom of the notch groove 25. In this case, $a_3$ may be understood as a length of an outer edge of the third straight-line segment 255 at the groove top or the opening, and $b_3$ may be understood as a diameter of an outer edge of the second arc segment 254 at the groove top or the opening. In other words, in the depth direction of the notch groove 25 (that is, in the direction from a groove opening to the groove bottom of the notch groove 25), the outer edge of the orthographic projection of the notch groove 25 includes two opposite semicircles, $b_3$ may be understood as a diameter of each of the semicircles, and $a_3$ may be understood as a distance between centers of two semicircles.

In some embodiments, referring to FIG. 6, the notch groove 25 is a double Y-shaped notch groove. When the internal pressure of the battery 100 increases and needs to be released, the internal pressure may be released from the double Y-shaped notch groove, to cause the opening region 24 to be flipped toward a support segment to achieve pressure release. For example, the double Y-shaped notch groove includes a fourth straight-line segment 256 and four fifth straight-line segments 257. Two ends of the fourth straight-line segment 256 are respectively connected to two fifth straight-line segments 257 arranged at a preset angle. In the depth direction of the notch groove 25, an arc-shaped segment 259 is defined between free ends of orthographic projections of two fifth straight-line segments 257 located at a same end of the fourth straight-line segment 256, and the arc-shaped segment 259 uses a vertex of the preset angle of the two fifth straight-line segments 257 as a center of a circle. A sixth straight-line segment 258 is defined between free ends of orthographic projections of two fifth straight-line segments 257 located on a same side of the fourth straight-line segment 256. Two arc-shaped segments 259 and two sixth straight-line segments 258 jointly form the predetermined opening boundary. It should be noted that, since widths of the fourth straight-line segment 256 and the fifth straight-line segment 257 are relatively small and can be ignored, the arc-shaped segment 259 and the sixth straight-line segment 258 may approximately intersect at a point. The arc-shaped segment 259 may be understood as being defined by free ends on sides close to each other of the orthographic projections of the two fifth straight-line segments 257 located at the same end of the fourth straight-line segment 256. The sixth straight-line segment 258 may be understood as being defined by free ends on sides close to each other of the orthographic projections of the two fifth straight-line segments 257 located on the same side of the fourth straight-line segment 256.

With reference to FIG. 6, an area of a region defined within the predetermined opening boundary (that is, an area of the orthographic projection of the opening region 24 in the depth direction of the notch groove 25) is $S_{double\ y}$,

$$S_{double\ y} = \frac{(a_4+b_4) \times c_4\sqrt{2(1-cos\alpha)}}{2} + \frac{\pi c_4{}^2\alpha}{180}$$, and a total length of the notch groove 25 is $L_{double\ y} = a_4 + 4c_4$. "Free ends E" of the two fifth straight-line segments 257 located at the same end of the fourth straight-line segment 256 may refer to endpoints on sides close to each other of the two fifth straight-line segments 257 located at the same end of the fourth straight-line segment 256. "Free ends F" of the two fifth straight-line segments 257 located at both ends of the fourth straight-line segment 256 and on the same side of the fourth straight-line segment 256 may refer to endpoints on sides close to each other of the two fifth straight-line segments 257 located at the both ends of the fourth straight-line segment 256 and on the same side of the fourth straight-line segment 256. $a_4$ is a length of the fourth straight-line segment 256, $b_4$ is a distance between the free ends F of the two fifth straight-line segments 257 located on the same side of the fourth straight-line segment 256, and $c_4$ is a length of the fifth straight-line segment 257.

Therefore, different shapes of notch groove 25 can change the structural strength of the opening region 24. Suitable notch grooves 25 may be selected based on different design criteria, so that the process difficulty of the anti-explosion valve 20 is reduced, a pressure release speed of the anti-explosion valve 20 is improved, and the safety performance of the battery 100 is improved.

Further, a cross section of the notch groove 25 may be a rectangle or an inverted trapezoid. The "cross section" herein is a plane parallel to the depth direction of the notch groove 25. When the cross section of the notch groove 25 is an inverted trapezoid, a width of the notch groove 25 gradually decreases in a direction toward the groove bottom of the notch groove 25. In this case, $a_4$ may be understood as a length of an outer edge of the fourth straight-line segment 256 at the groove top or the opening, $b_4$ is a distance between the free ends F of the two fifth straight-line segments 257 located on the same side of the fourth straight-line segment 256 at the groove top or the opening, and $c_4$ is a length of an outer edge of the fifth straight-line segment 257 at the groove top or the opening.

According to some specific embodiments of the present disclosure, as shown in FIG. 2, the anti-explosion valve 20 includes a connection segment 21, a support segment 22, and a buffer segment 23. The anti-explosion valve 20 is connected to the battery shell 10 through the connection segment 21. The connection segment 21 is connected to an outer peripheral side of the support segment 22, and the support segment 22 and the connection segment 21 are spaced apart from each other along a thickness direction of the support segment 22. The buffer segment 23 is connected between the connection segment 21 and the support segment 22, and the opening region 24 is provided on the support segment 22. In this way, the connection segment 21 can fixedly connect the anti-explosion valve 20 to the battery shell 10, and the support segment 22 can increase the structural strength of the opening region 24 to prevent the opening region 24 from being distorted by an external force. In addition, by arranging the buffer segment 23 between the connection segment 21 and the support segment 22, the buffer segment 23 can absorb thermal stress when the opening region 24 is welded to the support segment 22, thereby improving the reliability and safety of the anti-explosion valve 20.

Optionally, the support segment 22 is located on a side of the connection segment 21 adjacent to a center of the battery shell 10, so that the entire anti-explosion valve 20 is recessed toward the interior of the battery 100. In this way, abnormal opening of the opening region 24 caused due to impact of an external force on the opening region 24 can be effectively avoided.

According to some specific embodiments of the present disclosure, as shown in FIG. 2, a groove 221 is formed on the support segment 22, and the notch groove 25 is formed on a bottom wall of the groove 221. Therefore, protection of the support segment 22 to the opening region 24 can be increased. In addition, the opening region 24 is thinned, so that when the internal pressure of the anti-explosion valve 20 increases and needs to be released, the opening region 24 can be smoothly opened, thereby avoiding failure of the anti-explosion valve 20.

In addition, in the depth direction of the notch groove 25, a thickness of the opening region 24 may vary. For example, a thickness in a middle of the opening region 24 is less than a thickness in an edge, to ensure a strength of connection between the opening region 24 and the support segment 22 and reduce production costs of the opening region 24.

According to some specific embodiments of the present disclosure, in the depth direction of the notch groove 25, an outer edge of an orthographic projection of the groove 221 and the outer edge of the orthographic projection of the notch groove 25 have an overlapping region. That is, the notch groove 25 is provided at an edge of the bottom wall of the groove 221. In this way, it can be ensured that an area of the opening region 24 is maximized, which helps improve the pressure release performance of the anti-explosion valve 20.

According to some optional embodiments of the present disclosure, a shape of the anti-explosion valve 20 is an ellipse or an athletic track. In this way, the anti-explosion valve can better match the battery shell 10 of the battery 100. For example, when a shape of a cover plate of the battery shell 10 is an ellipse or an athletic track, an amount of gas exhausted from the anti-explosion valve 20 per unit time becomes larger, and a better pressure release effect is achieved.

As shown in FIG. 21 and FIG. 22, according to some embodiments of the present disclosure, the anti-explosion valve 20 is of a flat sheet structure. The groove 221 is formed on the flat sheet structure, and the notch groove 25 is formed at an edge of the bottom wall of the groove 221. In this way, when the internal pressure of the battery 100 increases and needs to be released, the anti-explosion valve 20 of the flat sheet structure is easily deformed, and gas may be exhausted along the opening region 24 encircled by the notch groove 25, so that the anti-explosion valve 20 of the flat sheet structure can better match the battery shell 10 of the battery 100 to quickly release the pressure.

According to some other embodiments of the present disclosure, a volume of the battery 100 is V, a unit of V is $mm^3$, a notch groove 25 is provided on the anti-explosion valve 20, and the anti-explosion valve 20 includes an opening region 24. In a depth direction of the notch groove 25, an outer edge of an orthographic projection of the opening region 24 is a predetermined opening boundary. An area of the orthographic projection of the opening region 24 is $S_1$, and a unit of $S_1$ is $mm^2$. $S_1$ and A meet: $5000 \times S_1/V \geq 0.3$ $mm^{-1}$. In the foregoing formula, the unit of the area $S_1$ of the orthographic projection of the opening region 24 is square millimeter, and the unit of the volume V of the battery 100 is cubic millimeter. When the internal pressure of the battery 100 is excessively large, the gas in the battery 100 may be smoothly released from the opening region 24 of the anti-explosion valve 20, to ensure safe use of the battery 100.

According to some embodiments of the present disclosure, $S_1$ and V meet: $5000 \times S_1/V \leq 6$ $mm^{-1}$. In this way, by controlling a ratio of the area $S_1$ of the opening region 24 to the volume V of the battery 100 to be within a suitable range, a pressure release rate of the battery 100 can be effectively improved, so that the internal pressure of the battery 100 can be released in time and quickly, thereby improving protection to the battery 100. In addition, the anti-explosion valve 20 has a high structural strength, which ensures safe use of the battery 100.

According to some embodiments of the present disclosure, when the positive electrode material of the battery 100 is the compound of the olivine-shaped structure, $S_1$ and V further meet: $0.3$ $mm^{-1} \leq 5000 \times S_1/V \leq 5$ $mm^{-1}$. In this way, by selecting the compound of the olivine-shaped structure as the positive electrode material of the battery 100, the battery 100 has excellent electrochemical performance. For example, the battery 100 has a high capacity. When the ratio of $S_1$ to V is less than $0.3$ $mm^{-1}$, the area of the opening region 24 is small, and a requirement for exhausting the gas in the battery 100 in time may not be met. When the ratio of $S_1$ to V is greater than 5 $mm^{-1}$, the area of the opening region 24 is large, and the structural strength of the anti-explosion valve 20 may be reduced, affecting safe use of the battery 100. By designing $S_1$ and V to meet $0.3$ $mm^{-1} \leq 5000 \times S_1/V \leq 5$ $mm^{-1}$, a proportion of the area of the opening region 24 to the volume of the battery 100 is suitable, which can ensure that the internal pressure of the battery 100 can be released in time and quickly while the battery 100 has excellent electrochemical performance, thereby effectively improving the safety of the battery 100. The compound of the olivine-shaped structure may be optionally selected from lithium iron phosphate, lithium ferromanganese phosphate, or a mixture of lithium iron phosphate and lithium ferromanganese phosphate, but is not limited thereto.

According to some other embodiments of the present disclosure, when the positive electrode material of the battery 100 includes the layered compound, $S_1$ and V further meet: $0.5$ $mm^{-1} \leq 5000 \times S_1/V \leq 6$ $mm^{-1}$. Due to the high activity of the lithium nickel cobalt manganese oxygen ternary layered material, by selecting a highly active material such as the lithium nickel cobalt manganese oxygen ternary layered material, a combination of lithium iron phosphate and the lithium nickel cobalt manganese oxygen ternary layered material, or a combination of lithium iron manganese and the lithium nickel cobalt manganese oxygen ternary layered material as the positive electrode material of the battery 100, the active materials account for a larger proportion inside the battery 100, so that the battery 100 has larger energy, and the battery 100 has better electrochemical performance, for example, a higher capacity. Therefore, a higher requirement is proposed on the pressure release rate of the anti-explosion valve 20. When the ratio of $S_1$ to V is less than $0.5$ $mm^{-1}$, the area of the opening region 24 is small, and the requirement of exhausting the gas in the battery 100 as soon as possible may not be met. When the ratio of $S_1$ to V is greater than 6 $mm^{-1}$, the area of the opening region 24 is large, and the safety performance of the battery 100 may be reduced. By designing $S_1$ and V to meet $0.5$ $mm^{-1} \leq 5000 \times S_1/V \leq 6$ $mm^{-1}$, a proportion of the area of the opening region 24 to the volume of the battery 100 is suitable, which can ensure that the internal pressure of the battery 100 can be released in time and quickly while the battery 100 has excellent charging and discharging performance, thereby ensuring safe use of the battery 100. Optionally, the layered compound is the lithium nickel cobalt manganese oxygen ternary layered material, lithium iron phosphate and the lithium nickel cobalt manganese oxygen ternary layered material, or lithium iron manganese and the lithium nickel cobalt manganese oxygen ternary layered material, but is not limited thereto.

A description is provided below by using Comparative Examples 5 and 6 (that is, the related art) and Examples 13 to 24 (that is, embodiments of the present disclosure). Batteries 100 in Comparative Examples 5 and 6 and batteries 100 in Examples 13 to 24 are tested separately by using the method specified in GB/T 31485-2015, and corresponding pressure release rate curves of the batteries 100 are recorded. The battery 100 in the related art is basically the same as the battery 100 in the embodiments, and differences between the batteries only lie in values of the area $S_1$ of the orthographic projection of the opening region 24 of the battery 100 and the volume V of the battery 100.

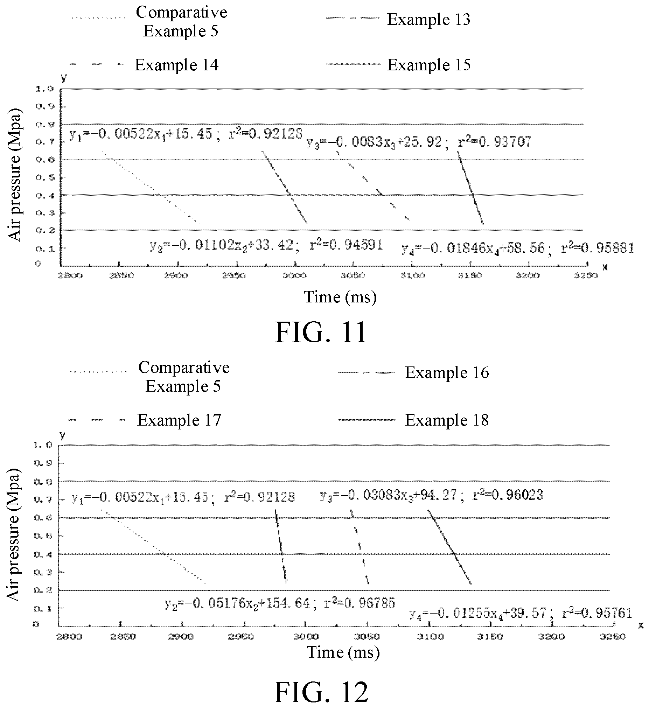

When the positive electrode material of the battery 100 is lithium iron phosphate, the area $S_1$ of the orthographic projection of the opening region 24 of the battery and the volume V of the battery 100 in Comparative Example 5, and areas $S_1$ of the orthographic projections of the opening regions 24 of the batteries 100 and volumes V of the batteries 100 in Examples 13 to 18 are selected from Table 3 below. Pressure release rate test results are shown in FIG. 11 and FIG. 12.

Table 3

| Serial number | $S_1$(lithium iron) | V | $5000 \times S_1/V$ |
|---|---|---|---|
| Example 13 | 80 | 400000 | 1 |
| Example 14 | 150 | 1800000 | 0.416666667 |
| Example 15 | 500 | 700000 | 3.571428571 |
| Example 16 | 800 | 800000 | 5 |
| Example 17 | 1300 | 1500000 | 4.333333333 |
| Example 18 | 1600 | 3500000 | 2.285714286 |
| Comparative Example 5 | 150 | 3300000 | 0.227272727 |

With reference to Table 3, FIG. 11, and FIG. 12, it can be learned that FIG. 11 is a curve diagram of air pressure changes inside the battery 100 in Examples 13 to 15 and Comparative Example 5 when the internal pressure of the battery 100 increases and the pressure is released. FIG. 12 is a curve graph of air pressure changes inside the battery 100 in Examples 16 to 18 and Comparative Example 5 when the internal pressure of the battery 100 increases and the pressure is released. It can be seen from the curve diagrams that, per unit time, the change values of air pressure decrease of the batteries 100 in Examples 13 to 18 are greater than the change value of air pressure decrease of the battery 100 in Comparative Example 5.

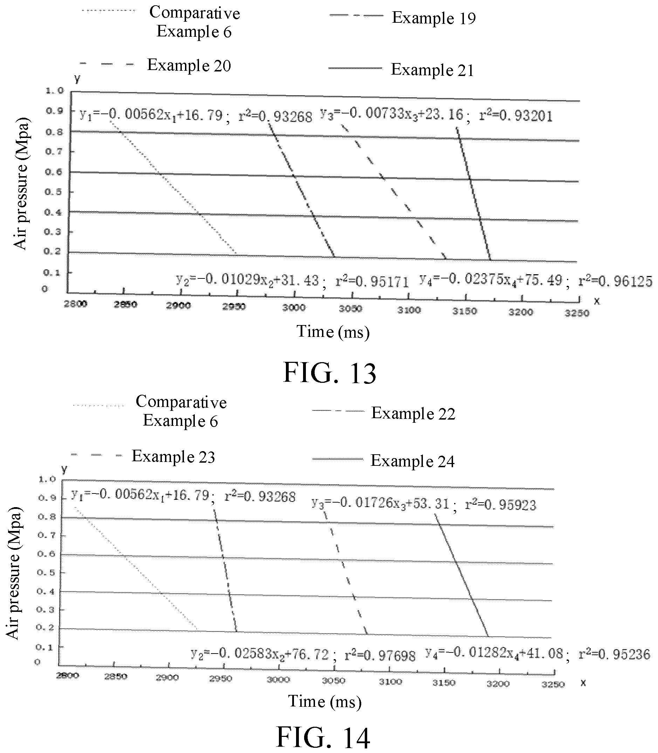

When the positive electrode material of the battery 100 is a layered compound and the layered compound is a lithium nickel cobalt manganese oxygen ternary layered material, the area $S_1$ of the orthographic projection of the opening region 24 of the battery and the volume V of the battery 100 in Comparative Example 6, and areas $S_1$ of the orthographic projections of the opening regions of the batteries 100 and volumes V of the batteries 100 in Examples 19 to 24 are selected from Table 4 below. Pressure release rate test results are shown in FIG. 13 and FIG. 14.

Table 4

| Serial number | $S_1$(Ternary) | V | $5000 \times S_1/V$ |
|---|---|---|---|
| Example 19 | 80 | 400000 | 1 |
| Example 20 | 150 | 100 | 1.5 |
| Example 21 | 500 | 600000 | 4.166666667 |
| Example 22 | 800 | 700000 | 5.714285714 |
| Example 23 | 1300 | 1800000 | 3.611111111 |
| Example 24 | 1600 | 3500000 | 2.285714286 |
| Comparative Example 6 | 150 | 2000000 | 0.375 |

With reference to Table 4, FIG. 13, and FIG. 14, it can be learned that FIG. 11 is a curve diagram of air pressure changes inside the battery 100 in Examples 19 to 21 and Comparative Example 6 when the internal pressure of the battery 100 increases and the pressure is released. FIG. 12 is a curve graph of air pressure changes inside the battery 100 in Examples 22 to 24 and Comparative Example 6 when the internal pressure of the battery 100 increases and the pressure is released. It can be seen from the curve diagrams that, per unit time, the change values of air pressure decrease of the batteries 100 in Examples 19 to 24 are greater than the change value of air pressure decrease of the battery 100 in Comparative Example 6.

Therefore, with reference to Examples 13 to 24, a value range of $5000 \times S_1/V$ protected in the embodiments of the present disclosure can effectively increase the area $S_1$ of the orthographic projection of the opening region 24, and increase an amount of gas exhausted from the anti-explosion valve 20 per unit time, thereby increasing the safety of the battery 100 using the anti-explosion valve 20 of the present disclosure.

In some embodiments, $S_1$ meets: $80\,mm^2 \leq S_1 \leq 1600\,mm^2$. If the area of the orthographic projection of the opening region 24 is less than $80\,mm^2$, the area of the opening region 24 is small, and the requirement of exhausting the gas in the battery 100 as soon as possible may not be met. If the area of the orthographic projection of the opening region 24 is greater than $1600\,mm^2$, the area of the opening region 24 is large, and the structural strength of the anti-explosion valve 20 may be reduced.

In some embodiments, V meets: 40000 mm$^3$≤V≤3500000 mm$^3$. If the volume of the battery 100 is less than 40000 mm$^3$, the volume of the battery 100 is small, and the electrochemical performance of the battery 100 may be poor. If the volume of the battery 100 is greater than 3500000 mm$^3$, the volume of the battery 100 is large, and the structural strength of the anti-explosion valve 20 may be reduced, leading to a decrease in the safety performance of the battery 100.

Therefore, by setting S$_1$ and V to respectively meet: 80 mm$^2$≤Si≤ 1600 mm$^2$ and 40000 mm$^3$≤A≤3500000 mm$^3$, an area of the opening region 24 is suitable, so that a pressure release rate of the anti-explosion valve 20 is improved while the structural strength of the anti-explosion valve 20 is ensured. In addition, the battery 100 has a suitable volume, which can meet excellent charging and discharging performance of the battery 100, and can also ensure that the gas can be exhausted in time after the internal pressure of the battery 100 increases, thereby ensuring that the battery 100 can be safely used.

According to some other embodiments of the present disclosure, in the depth direction of the notch groove, an area of an orthographic projection of the opening region 24 is related to an area of an orthographic projection of the anti-explosion valve 20. The area of the orthographic projection of the anti-explosion valve 20 is S, the area of the orthographic projection of the opening region is S$_1$, and S$_1$ and S meet: S$_1$/S≥0.3.

For example, S$_1$/S=0.5. The region defined within the predetermined opening boundary may be a region reserved for pressure release during design of the anti-explosion valve 20. When the internal pressure of the battery 100 increases and needs to be released, the internal pressure of the battery 100 may be released from the opening region 24. By limiting a ratio of S$_1$ to S, it may be ensured that an opened area of the opening region 24 is proper, which facilitates pressure release of the battery 100, thereby ensuring the pressure release performance of the anti-explosion valve 20 and improving the use safety of the battery 100.

It should be noted that, when the anti-explosion valve 20 is welded and fixed to the battery 100, for example, the battery shell 10, a welding seam is formed between the anti-explosion valve 20 and the battery shell 10. Alternatively, when the anti-explosion valve 20 is welded and fixed to the cover plate of the battery, a welding seam may be formed between the anti-explosion valve 20 and the cover plate. One half of a width of the welding seam is an outer edge of the anti-explosion valve 20. The width of the welding seam refers to a gap between an outer contour and an inner contour of an orthographic projection of the welding seam in the depth direction of the notch groove 25.

According to the battery 100 in the embodiments of the present disclosure, by controlling the shape of the anti-explosion valve 20, the anti-explosion valve 20 may be applicable to battery shells 10 of different shapes of different batteries 100, to increase an application range of the anti-explosion valve 20. In addition, by controlling an area ratio of the area S$_1$ of the orthographic projection of the opening region 24 to the area S of the orthographic projection of the anti-explosion valve 20, a proportion of an area of the opening region 24 in the anti-explosion valve 20 may be increased, thereby ensuring an opening area of the anti-explosion valve 20, and increasing the operation efficiency of the anti-explosion valve 20, thereby enabling the internal pressure of the battery 100 to be released in time, increasing protection to the battery 100, and reducing costs of using the battery 100.

According to some embodiments of the present disclosure, S$_1$ and S further meet: S$_1$/S≤0.95, 80 mm$^2$≤S$_1$≤1600 mm$^2$, and 178.5 mm$^2$≤S≤5212.5 mm$^2$. For example, S$_1$=1000 mm$^2$, and S=3000 mm$^2$. In a case that the total area S of the anti-explosion valve 20 is fixed, a situation that the opening region 24 cannot be normally opened when S$_1$<80 mm$^2$ can be effectively avoided. Alternatively, when S$_1$>1600 mm$^2$, the opening region 24 accounts for an excessively large proportion in the area S of the anti-explosion valve 20. As a result, the structural stability of the anti-explosion valve 20 is reduced, and the opening region 24 is prone to be mistakenly opened, affecting a service life of the anti-explosion valve 20. Therefore, by limiting value ranges of S$_1$ and S to cause S$_1$/S to be within a proper range, the structural strength of the opening region 24 is increased while ensuring that the area S$_1$ of the orthographic projection of the opening region 24 can meet a pressure release requirement, thereby ensuring the stability of connection between the opening region 24 and the anti-explosion valve 20.

In some embodiments, the notch groove 25 may be configured as a C-shaped notch groove, an annular notch groove, or a double Y-shaped notch groove. A pattern of the notch groove 25 is not limited to the foregoing shapes, and the notch groove may be a notch groove 25 in any shape. The notch groove 25 may be designed according to requirements to meet different usage occasions. When the notch groove 25 is a C-shaped notch groove, an annular notch groove, or a double Y-shaped notch groove, a corresponding area of the notch groove is as described above, and details are not described herein again.

A description is provided below by using Comparative Examples 7 and 12 (that is, the related art) and Examples 25 to 30 (that is, embodiments of the present disclosure). Batteries 100 in Comparative Examples 7 and 12 and batteries 100 in Examples 25 to 30 are tested separately by using the method specified in GB/T 31485-2015, and corresponding pressure release rate curves of the batteries 100 are recorded. The battery 100 in the related art is basically the same as the battery 100 in the embodiments, and differences between the batteries only lie in values of the area S$_1$ of the orthographic projection of the opening region 24 and the area S of the orthographic projection of the anti-explosion valve 20.

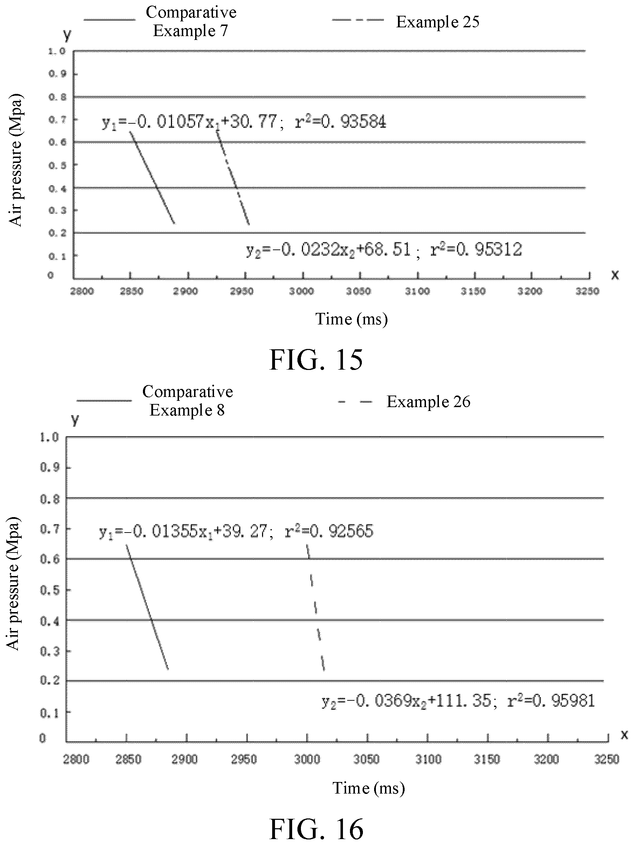

Areas $S_1$ of the orthographic projections of the opening regions 24 and areas S of the orthographic projections of the anti-explosion valves 20 of the batteries in Comparative Examples 7 to 12, and areas $S_1$ of the orthographic projections of the opening regions 24 and areas S of the orthographic projections of the anti-explosion valves 20 of the batteries 100 in Examples 25 to 30 are selected from Table 5 below. Pressure release rate test results are shown in FIG. 15 to FIG. 20.

Table 5

| Serial number | $S_1$ | S | $S_1/S$ |
|---|---|---|---|
| Example 25 | 80 | 178.5 | 0.448179272 |
| Example 26 | 500 | 800 | 0.625 |
| Example 27 | 800 | 1000 | 0.8 |
| Example 28 | 1200 | 1300 | 0.923076923 |
| Example 29 | 1600 | 3000 | 0.533333333 |
| Example 30 | 1600 | 5212.5 | 0.306954436 |
| Comparative Example 7 | 30 | 178.5 | 0.168067227 |
| Comparative Example 8 | 160 | 800 | 0.2 |
| Comparative Example 9 | 250 | 1000 | 0.25 |
| Comparative Example 10 | 325 | 1300 | 0.25 |
| Comparative Example 11 | 600 | 3000 | 0.2 |
| Comparative Example 12 | 1050 | 5212.5 | 0.201438849 |

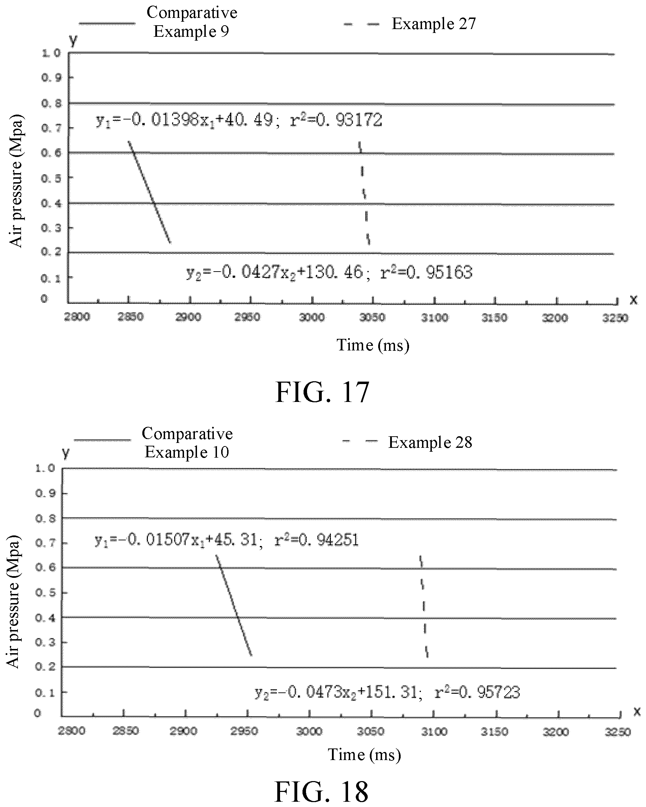

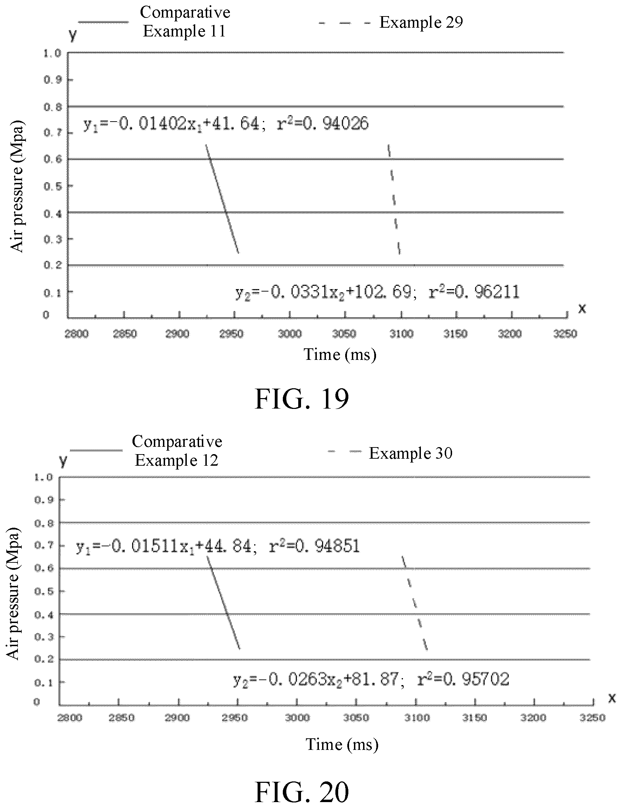

With reference to Table 5 and FIG. 15 to FIG. 20, it can be learned that FIG. 15 is a curve diagram of air pressure changes inside the battery 100 in Example 25 and Comparative Example 7 when the internal pressure of the battery 100 increases and the pressure is released. FIG. 16 is a curve graph of air pressure changes inside the battery 100 in Example 26 and Comparative Example 8 when the internal pressure of the battery 100 increases and the pressure is released. FIG. 17 is a curve graph of air pressure changes inside the battery 100 in Example 27 and Comparative Example 9 when the internal pressure of the battery 100 increases and the pressure is released. FIG. 18 is a curve graph of air pressure changes inside the battery 100 in Example 28 and Comparative Example 10 when the internal pressure of the battery 100 increases and the pressure is released. FIG. 19 is a curve graph of air pressure changes inside the battery 100 in Example 29 and Comparative Example 11 when the internal pressure of the battery 100 increases and the pressure is released. FIG. 20 is a curve graph of air pressure changes inside the battery 100 in Example 30 and Comparative Example 12 when the internal pressure of the battery 100 increases and the pressure is released. It can be seen from the curve diagrams that, per unit time, the change values of air pressure decrease of the batteries 100 in Examples 25 to 30 are greater than the change values of air pressure decrease of the batteries 100 in Comparative Examples 7 to 12.

Therefore, with reference to Examples 25 to 30, a value range of $S_1/S$ protected in the embodiments of the present disclosure can effectively increase the opened area the opening region 24, and increase an amount of gas exhausted from the anti-explosion valve 20 per unit time, thereby increasing the safety of the battery 100 using the anti-explosion valve 20 of the present disclosure.

Optionally, an energy density of the battery 100 is ED. ED meets: 200 wh/kg≤ED≤280 wh/kg. In this way, larger energy of the battery 100 indicates more active materials or materials with higher activity inside the battery 100. Therefore, a more accurate design is required for an amount of gas exhausted by the anti-explosion valve 20 of the battery 100, to ensure timely opening in an extreme case and avoid mistaken opening of the anti-explosion valve.

An embodiment of a second aspect of the present disclosure provides a battery module 200. Referring to FIG. 23, the battery module includes the battery 100 according to the embodiment of the first aspect. The battery module 200 may include a plurality of batteries 100 arranged side by side. The plurality of batteries 100 may be connected in series or in parallel. In the description of the present disclosure, "a plurality of" means two or more. Therefore, the battery 100 is used in the battery module 200, which can improve the safety of the battery module 200. The battery module 200 may further include two end plates (not shown in the figure) and two side plates (not shown in the figure). The two end plates are distributed at two ends of the plurality of batteries 100 along a first direction, and the two side plates are distributed on two sides of the plurality of batteries 100 along a second direction. The end plates are fixedly connected to the side plates to fix the batteries 100, and the first direction is perpendicular to the second direction. Certainly, in other embodiments, the battery module 200 may alternatively include two end plates and ties (not shown in the figure). The two end plates are distributed at two ends of the plurality of batteries 100 and are fixed by the ties.

The battery module 200 according to the embodiments of the present disclosure has good safety and a long service life.

An embodiment of a third aspect of the present disclosure provides a battery pack 300. Referring to FIG. 23 and FIG. 24, the battery pack includes the battery 100 according to the embodiment of the first aspect, or the battery module 200 according to the embodiment of the second aspect. The battery pack 300 includes a tray. The battery 100 or the battery module 200 is fixed in the tray, and the tray is fixed to a vehicle 400. The battery 100 in the foregoing embodiments may be directly arranged in the tray, or the battery module 200 in the foregoing embodiments is fixed in the tray.

According to the battery pack 300 in the embodiments of the present disclosure, by using the battery 100 or the battery module 200 described above, the stability of using the battery pack 300 can be improved.

An embodiment of a fourth aspect of the present disclosure provides a vehicle 400. Referring to FIG. 23 to FIG. 25, the vehicle includes the battery 100 according to the embodiment of the first aspect or includes the battery pack 300 according to the embodiment of the third aspect. In this way, a possibility of detonation of the vehicle 400 may be reduced, thereby improving the safety performance of the vehicle 400. For example, in some embodiments, the battery 100 may be directly mounted on the vehicle 400. In some other embodiments, the battery 100 is assembled into the battery pack 300, and the battery pack 300 is mounted on the vehicle 400.

In the description of this specification, the description of the reference terms such as "an embodiment", "some embodiments", "exemplary embodiments", "example", "specific example", or "some examples" means that specific features, structures, materials or characteristics described with reference to the embodiment or example are included in at least one embodiment or example of the present disclosure. In this specification, schematic descriptions of the foregoing terms do not necessarily refer to the same embodiment or example.

Although the embodiments of the present disclosure have been shown and described, a person of ordinary skill in the art may understand that various changes, modifications, replacements, and variations may be made to the embodiments without departing from the principle and purpose of the present disclosure, and the scope of the present disclosure is as defined by the appended claims and their equivalents.

**Claims**

1. A battery (100), comprising:

    a battery shell (10); and
    an anti-explosion valve (20), the anti-explosion valve (20) being arranged on the battery shell (10), a notch groove (25) being provided on the anti-explosion valve (20), the anti-explosion valve (20) comprising an opening region (24), in a depth direction of the notch groove (25), an outer edge of an orthographic projection of the opening region (24) being a predetermined opening boundary, an area of the orthographic projection of the opening region (24) being $S_1$, a unit of $S_1$ being $mm^2$, a capacity of the battery (100) being A, a unit of A being Ah, and $S_1$ and A meeting: $S_1 > 0.5A$.

2. The battery (100) according to claim 1, wherein when a positive electrode material of the battery (100) is a compound of an olivine-shaped structure, $S_1$ and A meet: $S_1 > 0.5A$; or
when a positive electrode material of the battery (100) comprises a layered compound, $S_1$ and A meet: $S_1 > 1.2A$.

3. The battery (100) according to claim 1 or 2, wherein $S_1$ meets: $80\ mm^2 \leq S_1 \leq 1600\ mm^2$.

4. The battery (100) according to any one of claims 1 to 3, wherein A meets: $30\ Ah \leq A \leq 400\ Ah$.

5. The battery (100) according to any one of claims 1 to 4, wherein the notch groove (25) comprises two first arc segments (251) arranged opposite to each other, a first straight-line segment (252), and two second straight-line segments (253) spaced apart from each other, the first straight-line segment (252) and the second straight-line segments (253) are arranged parallel to each other, two ends of the first straight-line segment (252) are respectively connected to the two first arc segments (251), and each of the second straight-line segments (253) is connected to the corresponding first arc segment (251); and
in the depth direction of the notch groove (25), two free ends of an outer edge of an orthographic projection of the notch groove (25) are connected to form a connection line (263), and the connection line (263) and the outer edge of the orthographic projection of the notch groove (25) jointly form the predetermined opening boundary.

6. The battery (100) according to claim 5, wherein a first reinforcing groove (29) is formed on the opening region (24), the first reinforcing groove (29) comprises two fourth arc segments (260), the two fourth arc segments (260) are symmetrically arranged along a width direction of the anti-explosion valve (20), vertices of the two fourth arc segments (260) coincide with each other, two ends of one of the fourth arc segments (260) extend to the second straight-line segments (253), and two ends of the other of the fourth arc segments (260) extend to the first straight-line segment (252).

7. The battery (100) according to claim 6, wherein in the depth direction of the notch groove (25), a depth of the first reinforcing groove (29) is less than a depth of the notch groove (25).

8. The battery (100) according to any one of claims 1 to 4, wherein the notch groove (25) comprises two second arc segments (254) arranged opposite to each other and two third straight-line segments (255) arranged parallel to each other, two ends of each of the third straight-line segments (255) are respectively connected to the two second arc segments (254), and the two third straight-line segments (255) and the two second arc segments (254) form a closed annular structure; and
in the depth direction of the notch groove (25), an outer edge of an orthographic projection of the notch groove (25) forms the predetermined opening boundary.

9. The battery (100) according to claim 8, wherein a second reinforcing groove (290) is formed on the opening region (24), the second reinforcing groove (290) comprises two eighth straight-line segments (261) and one ninth straight-line segment (262), one end of each of the two eighth straight-line segments (261) is connected to the ninth straight-line segment (262), an angle is formed between the two eighth straight-line segments (261), the other ends of the two eighth straight-line segments (261) respectively extend to the two third straight-line segments (255), and the other end of the ninth straight-line segment (262) is connected to the second arc segment (254).

10. The battery (100) according to any one of claims 1 to 4, wherein the notch groove (25) comprises a fourth straight-line segment (256) and four fifth straight-line segments (257), and two ends of the fourth straight-line segment (256) are respectively connected to two fifth straight-line segments (257) arranged at a preset angle; and
in the depth direction of the notch groove (25), an arc-shaped segment (259) is defined between free ends of orthographic projections of two fifth straight-line segments (257) located at a same end of the fourth straight-line segment (256), the arc-shaped segment (259) uses a vertex of the preset angle as a center of a circle, a sixth straight-line segment (258) is defined between free ends of orthographic projections of two fifth straight-line segments (257) located on a same side of the fourth straight-line segment (256), and two arc-shaped segments (259) and two sixth straight-line segments (258) jointly form the predetermined opening boundary.

11. The battery (100) according to any one of claims 1 to 10, wherein the anti-explosion valve (20) comprises a connection segment (21), a support segment (22), and a buffer segment (23), the connection segment (21) is connected to an outer peripheral side of the support segment (22), the support segment (22) and the connection segment (21) are spaced apart from each other along a thickness direction of the support segment (22), the buffer segment (23) is connected between the connection segment (21) and the support segment (22), and the opening region (24) is provided on the support segment (22).

12. The battery (100) according to any one of claims 1 to 11, wherein a groove (221) is formed on the anti-explosion valve (20), and the notch groove (25) is formed on a bottom wall of the groove (221).

13. The battery (100) according to claim 12, wherein in the depth direction of the notch groove (25), an outer edge of an orthographic projection of the groove (221) and the outer edge of the orthographic projection of the notch groove (25) have an overlapping region.

14. The battery (100) according to any one of claims 1 to 13, wherein a shape of the anti-explosion valve (20) is an ellipse or an athletic track.

15. The battery (100) according to any one of claims 1 to 14, wherein the anti-explosion valve (20) is of a flat sheet structure.

16. The battery (100) according to any one of claims 1 to 15, wherein a volume of the battery (100) is V, and a unit of V is $mm^3$, wherein V meets: $40000 \ mm^3 \leq V \leq 3500000 \ mm^3$.

17. The battery (100) according to any one of claims 1 to 16, wherein the volume of the battery (100) is V, and the unit of V is $mm^3$, wherein $S_1$ and V meet: $0.3 \ mm^{-1} \leq 5000 \times S_1/V$.

18. The battery (100) according to any one of claims 1 to 17, wherein the volume of the battery (100) is V, and the unit of V is mm$^3$, wherein $S_1$ and V meet: $5000 \times S_1/V \leq 6$ mm$^{-1}$.

19. The battery (100) according to any one of claims 1 to 18, wherein the volume of the battery (100) is V, and the unit of V is mm$^3$, wherein when the positive electrode material of the battery (100) is the compound of the olivine-shaped structure, $S_1$ and V meet: $0.3$ mm$^{-1} \leq 5000 \times S_1/V \leq 5$ mm$^{-1}$.

20. The battery (100) according to any one of claims 1 to 18, wherein the volume of the battery (100) is V, and the unit of V is mm$^3$, wherein when the positive electrode material of the battery (100) comprises the layered compound, $S_1$ and V meet: $0.5$ mm$^{-1} \leq 5000 \times S_1/V \leq 6$ mm$^{-1}$.

21. The battery (100) according to any one of claims 1 to 20, wherein in the depth direction of the notch groove (25), an area of an orthographic projection of the anti-explosion valve (20) is S, and a unit of S is mm$^2$, wherein S meets: $178.5$ mm$^2 \leq S \leq 5212.5$ mm$^2$.

22. The battery (100) according to any one of claims 1 to 21, wherein in the depth direction of the notch groove (25), the area of the orthographic projection of the anti-explosion valve (20) is S, and the unit of S is mm$^2$, wherein S and $S_1$ further meet: $0.3 \leq S_1/S \leq 0.95$.

23. A battery module (200), comprising the battery (100) according to any of claims 1 to 22.

24. A battery pack (300), comprising the battery (100) according to any one of claims 1 to 22 or the battery module (200) according to claim 23.

25. A vehicle (400), comprising the battery (100) according to any one of claims 1 to 22 or the battery pack (300) according to claim 24.

FIG. 1

FIG. 2

FIG. 3

FIG. 4

FIG. 5

FIG. 6

$y_1=-0.00761x_1+22.21$ ; $r^2=0.93128$

$y_3=-0.01242x_3+37.88$ ; $r^2=0.96515$

$y_2=-0.03857x_2+114.01$ ; $r^2=0.98213$    $y_4=-0.01867x_4+58.05$ ; $r^2=0.96435$

Time (ms)

## FIG. 7

$y_1=-0.00926x_1+26.901$ ; $r^2=0.95136$

$y_3=-0.03912x_3+117.03$ ; $r^2=0.96826$

$y_2=-0.01923x_2+56.65$ ; $r^2=0.95136$

$y_4=-0.06255x_4+190.68$ ; $r^2=0.97422$

Time (ms)

## FIG. 8

FIG. 9

FIG. 10

Comparative Example 5 .............

Example 13 — · — · —

Example 14 — · — · —

Example 15 ————————

$y_1=-0.00522x_1+15.45$; $r^2=0.92128$

$y_3=-0.0083x_3+25.92$; $r^2=0.93707$

$y_2=-0.01102x_2+33.42$; $r^2=0.94591$

$y_4=-0.01846x_4+58.56$; $r^2=0.95881$

Air pressure (Mpa)

Time (ms)

FIG. 11

Comparative Example 5 .............

Example 16 — — —

Example 17 — — —

Example 18 ————————

$y_1=-0.00522x_1+15.45$; $r^2=0.92128$

$y_3=-0.03083x_3+94.27$; $r^2=0.96023$

$y_2=-0.05176x_2+154.64$; $r^2=0.96785$

$y_4=-0.01255x_4+39.57$; $r^2=0.95761$

Air pressure (Mpa)

Time (ms)

FIG. 12

Comparative ............ Example 6 — — — Example 19

— — — Example 20 ——————— Example 21

$y_1=-0.00562x_1+16.79$; $r^2=0.93268$  $y_3=-0.00733x_3+23.16$; $r^2=0.93201$

Air pressure (Mpa)

$y_2=-0.01029x_2+31.43$; $r^2=0.95171$  $y_4=-0.02375x_4+75.49$; $r^2=0.96125$

Time (ms)

## FIG. 13

Comparative ............ Example 6 — — — Example 22

— — — Example 23 ——————— Example 24

$y_1=-0.00562x_1+16.79$; $r^2=0.93268$  $y_3=-0.01726x_3+53.31$; $r^2=0.95923$

Air pressure (Mpa)

$y_2=-0.02583x_2+76.72$; $r^2=0.97698$  $y_4=-0.01282x_4+41.08$; $r^2=0.95236$

Time (ms)

## FIG. 14

Comparative
Example 7                                    ----- Example 25

$y_1 = -0.01057x_1 + 30.77$; $r^2 = 0.93584$

$y_2 = -0.0232x_2 + 68.51$; $r^2 = 0.95312$

Time (ms)

FIG. 15

Comparative
Example 8                                    -- -- Example 26

$y_1 = -0.01355x_1 + 39.27$; $r^2 = 0.92565$

$y_2 = -0.0369x_2 + 111.35$; $r^2 = 0.95981$

Time (ms)

FIG. 16

FIG. 17

FIG. 18

$y_1 = -0.01402x_1 + 41.64; \quad r^2 = 0.94026$

$y_2 = -0.0331x_2 + 102.69; \quad r^2 = 0.96211$

FIG. 19

$y_1 = -0.01511x_1 + 44.84; \quad r^2 = 0.94851$

$y_2 = -0.0263x_2 + 81.87; \quad r^2 = 0.95702$

FIG. 20

FIG. 21

FIG. 22

FIG. 23

FIG. 24

FIG. 25

## INTERNATIONAL SEARCH REPORT

<table>
<tr><td></td><td>International application No.<br>**PCT/CN2023/093648**</td></tr>
</table>

| A. | CLASSIFICATION OF SUBJECT MATTER |
|---|---|

H01M50/342(2021.01)i; H01M50/30(2021.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 电池, 排气, 泄压, 防爆, 安全, 释放, 限压, 泄气, 阀, 片, 膜, 面积, 半径, 容量, 能量, safe+, exhaust, explos+, pressure, relief, deflation, area+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114628846 A (BYD CO., LTD.) 14 June 2022 (2022-06-14)<br>description, paragraphs [0003]-[0086], and figures 1-22 | 1-25 |
| PX | CN 114628845 A (BYD CO., LTD.) 14 June 2022 (2022-06-14)<br>description, paragraphs [0003]-[0066], and figures 1-12 | 1-25 |
| X | CN 214378638 U (SVOLT ENERGY TECHNOLOGY (WUXI) CO., LTD.) 08 October 2021<br>(2021-10-08)<br>description, paragraphs [0018]-[0052], and figures 1-4 | 1-25 |
| X | CN 212571194 U (SUNWODA ELECTRIC VEHICLE BATTERY CO., LTD.) 19 February<br>2021 (2021-02-19)<br>description, paragraphs [0004]-[0056], and figures 1-7 | 1-25 |
| X | JP 2007073212 A (MATSUSHITA ELECTRIC IND. CO., LTD.) 22 March 2007<br>(2007-03-22)<br>description, paragraphs [0009]-[0054], and figure 1 | 1-25 |
| A | CN 112886132 A (BYD CO., LTD.) 01 June 2021 (2021-06-01)<br>entire document | 1-25 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **29 June 2023** | **30 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/093648** |

**C.    DOCUMENTS CONSIDERED TO BE RELEVANT**

| Category* | Citation of document, with indication, where appropriate, of the relevant passages | Relevant to claim No. |
|---|---|---|
| A | CN 216120620 U (XIAMEN HAICHEN NEW ENERGY TECHNOLOGY CO., LTD.) 22 March 2022 (2022-03-22) entire document | 1-25 |
| A | CN 102804449 A (TOYOTA MOTOR CO., LTD. et al.) 28 November 2012 (2012-11-28) entire document | 1-25 |

Form PCT/ISA/210 (second sheet) (July 2022)

**INTERNATIONAL SEARCH REPORT**
Information on patent family members

| International application No. |
| --- |
| **PCT/CN2023/093648** |

| Patent document cited in search report | | | Publication date (day/month/year) | Patent family member(s) | | | Publication date (day/month/year) |
| --- | --- | --- | --- | --- | --- | --- | --- |
| CN | 114628846 | A | 14 June 2022 | CN | 114628846 | B | 09 September 2022 |
| CN | 114628845 | A | 14 June 2022 | CN | 114628845 | B | 09 September 2022 |
| CN | 214378638 | U | 08 October 2021 | None | | | |
| CN | 212571194 | U | 19 February 2021 | None | | | |
| JP | 2007073212 | A | 22 March 2007 | None | | | |
| CN | 112886132 | A | 01 June 2021 | CN | 112886132 | B | 12 November 2021 |
| CN | 216120620 | U | 22 March 2022 | None | | | |
| CN | 102804449 | A | 28 November 2012 | EP | 2438641 | A1 | 11 April 2012 |
| | | | | EP | 2438641 | B1 | 27 December 2017 |
| | | | | US | 2012088128 | A1 | 12 April 2012 |
| | | | | US | 8900733 | B2 | 02 December 2014 |
| | | | | JP | 2010282850 | A | 16 December 2010 |
| | | | | JP | 4881409 | B2 | 22 February 2012 |
| | | | | WO | 2010140045 | A1 | 09 December 2010 |
| | | | | KR | 20120017441 | A | 28 February 2012 |
| | | | | KR | 101321313 | B1 | 28 October 2013 |
| | | | | CA | 2764347 | A1 | 09 December 2010 |
| | | | | CA | 2764347 | C | 22 March 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210512549